# EUROPEAN PATENT APPLICATION

(11) **EP 0 711 020 A2**
(43) Date of publication of application: **08.05.1996**
(21) Application number: 95116213.0
(22) Date of filing: 14.10.1995
(51) Int. Cl.: H02K 5/22

(54) **Improvement in the stator of refrigeration compressor motors**

(30) Priority: 03.11.1994 IT PN940040 U
(71) Applicant: Zanussi Elettromeccanica S.p.A., I-33170 Pordenone (IT)
(72) Inventor: Cossalter, Daniele, I-32032 Feltre, Belluno (IT); Zanne, Pietro, I-32100 Belluno (IT)
(74) Representative: Giugni, Valter

(57) **Abstract**

Electric refrigeration compressor motor comprising a stator (1), a plurality of slots (2), a respective plurality of electric coils (3) inserted in said slots, a respective plurality of insulating layers arranged between said slots and said electric coils, a plurality of electric leads (4, 5, 6) terminating said electric coils and having their free ends engaged in an insulating element formed by a single-piece block (8) which comprises a body (20) containing electric contacts and a plurality of appendices (9, 10, 11) adapted to be inserted firmly in the spaces existing between two or more pairs of contiguous electric coils, wherein said appendices are in a preferred manner arranged so as to be in contact with a surface of said stator.

The outer appendices (9, 11) are provided at their respective end portions with respective anchorage teeth (13, 14) which extend outwardly and substantially adhere against said surface of the stator, whereas the middle appendix (10) is provided with a rigid flat membrane (15) adapted to completely adhere against said surface of the stator.

## Description

The present invention refers to a particular form of an arrangement provided for ensuring both an anchorage function and the connection of the electric wires branching off from the stator of an electric motor with the respective electric lead wires connecting said wires from the stator with the external power-supply and control circuitry.

It will be appreciated that, although in the following description, mainly for reasons of greater simplicity, reference is in particular made to such a stator as used in the electric motors of refrigeration compressors, the present invention equally applies to stators as may be used in different applications, provided that they fall within the scope of the appended claims.

Refrigeration compressors are known in the art which make use of electric motors that most usually are of the asynchronous, single-phase type with its auxiliary winding connected only during starting (split-phase motor).

Motors of this type have three output leads (ie. common wire, main winding, secondary winding), said output leads being usually connected to said external wires through crimping or soldering of each such lead with the respective wire, whereas the subsequent protection of the connection obtained in such a manner occurs through the application of heat-shrinking sleeves.

The connection outside the hermetically sealed casing occurs through a special block which is fixed to said hermetically sealed casing and to which said external connections are made.

Such a production technique has however a number of drawbacks, the first of which lies in the fact that making the connection by crimping, protecting the connection through the application of the heat-shrinking sleeve, and placing the connection in a recess to be adequately found within the coils involve an operation that must be performed entirely by hand and, as a result, is not only very time, labour and cost intensive, but also ensures lower quality standards considering the fact that electric wires usually break quite easily. In addition, there is no practical possibility to perform automated intermediate tests to check each hitherto made electric connection or contact made continuity, which means a further decline in production quality standards and a corresponding increase in rejects during final production inspection and test stages.

Substantially plane insulating supports are also known which are adapted to adhere against the surface of the stator and support at least two distinct blocks for the connection of the leads from the coils with the external wires. However, such a solution has some other different drawbacks in that, for instance, it makes it necessary for the whole stator assemby cycle to be substantially modified in order to allow for said insulating supports to be appropriately mounted. Furthermore, the need arises to also provide and make use of a pair of connection blocks adapted to support the electric contacts and this puts of course a penalty on overall costs. A further drawback is the fact that it is in most cases necessary to provide a particular type of supports for each type of stator, under correspondingly heavier costs deriving from the practical impossibility of using a standardized support item.

It would therefore be desirable, and it is in fact a main purpose of the present invention, to provide a motor for refrigeration compressors in which the stator is capable of being manufactured in a highly automated and standardized manner, enables production techniques to be used which have a high inherent quality content, lends itself to be conveniently tested for electrical continuity starting from the early stages of its production process, makes as much as possible use of standardized component parts, and is easily and cost-effectively assemblable under the use of materials, equipment and techniques that are readily available in the art.

Such an aim is reached according to the present invention in a compressor motor as described below by way of non-limiting example with reference to the accompanying drawings, in which:

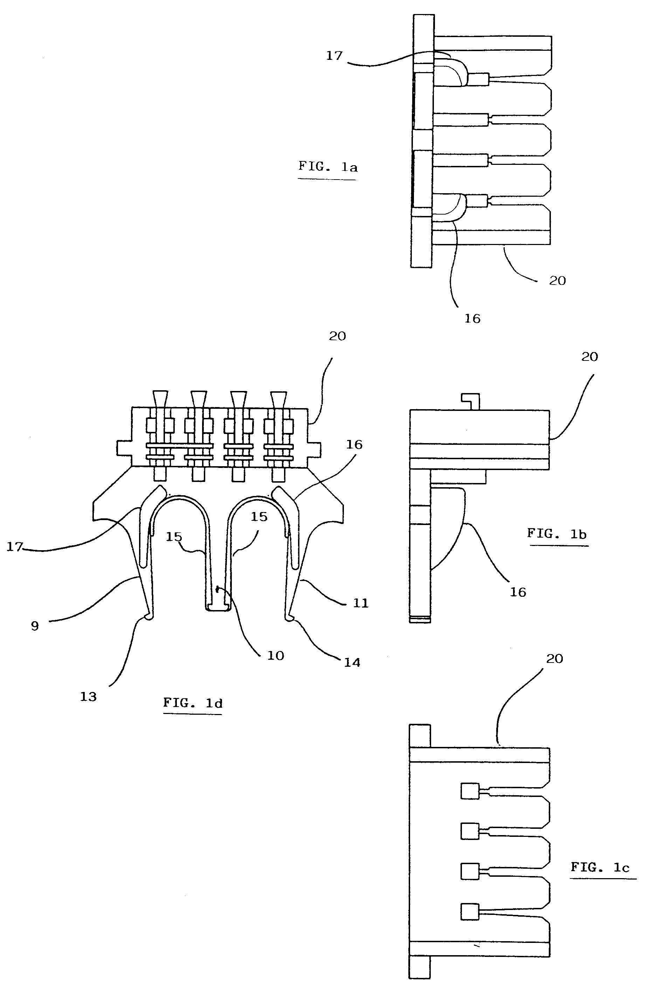

- Figures 1a, 1b, 1c and 1d are as many orthogonal outside views of a connection block in a stator according to the present invention;

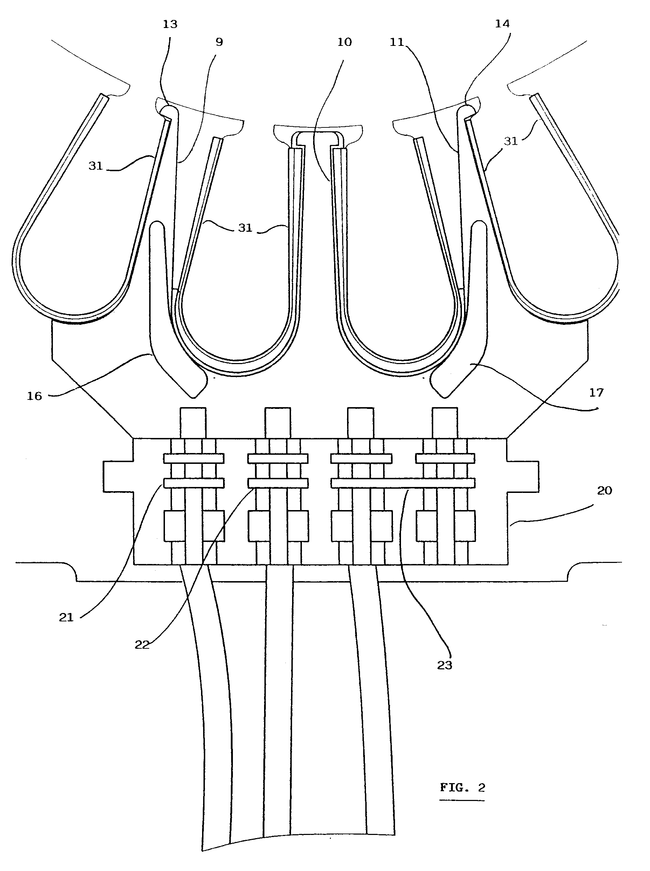

- Figure 2 is an enlarged view of the connection block appearing in Figure 1d, wherein the block is connected to the external wires;

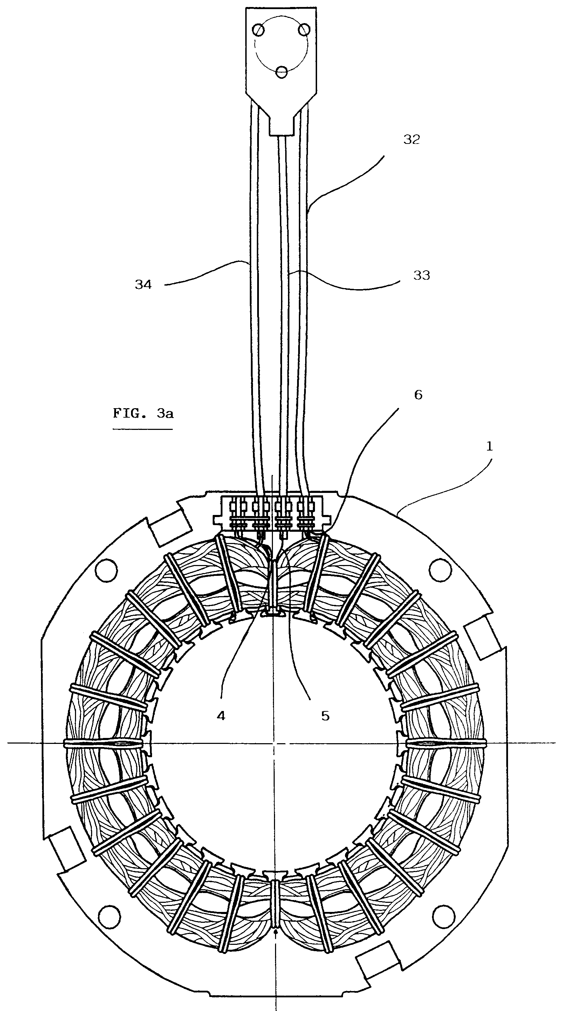

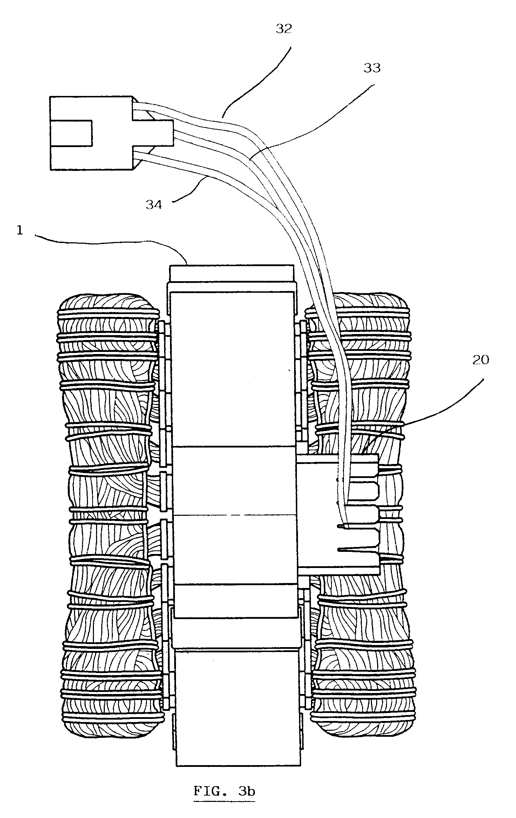

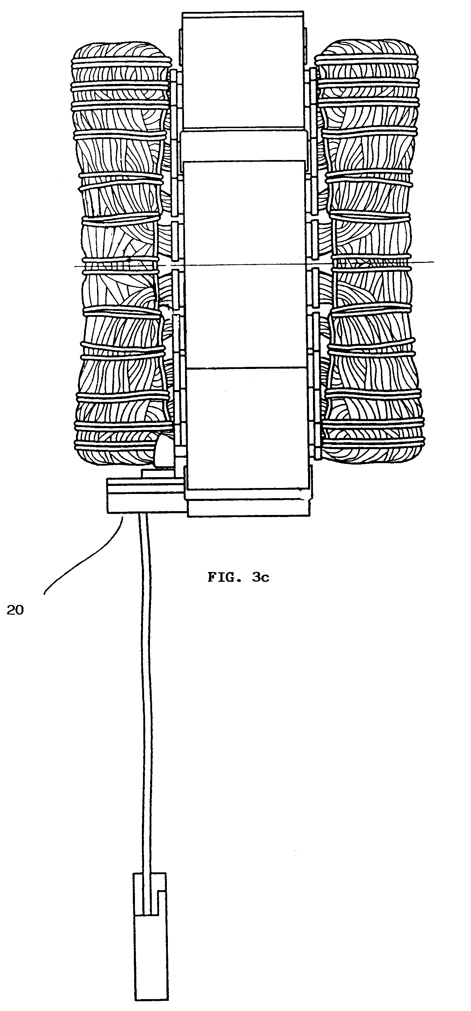

- Figures 3a, 3b and 3c are as many orthogonal outside views of the connection block as mounted in the stator according to the present invention;

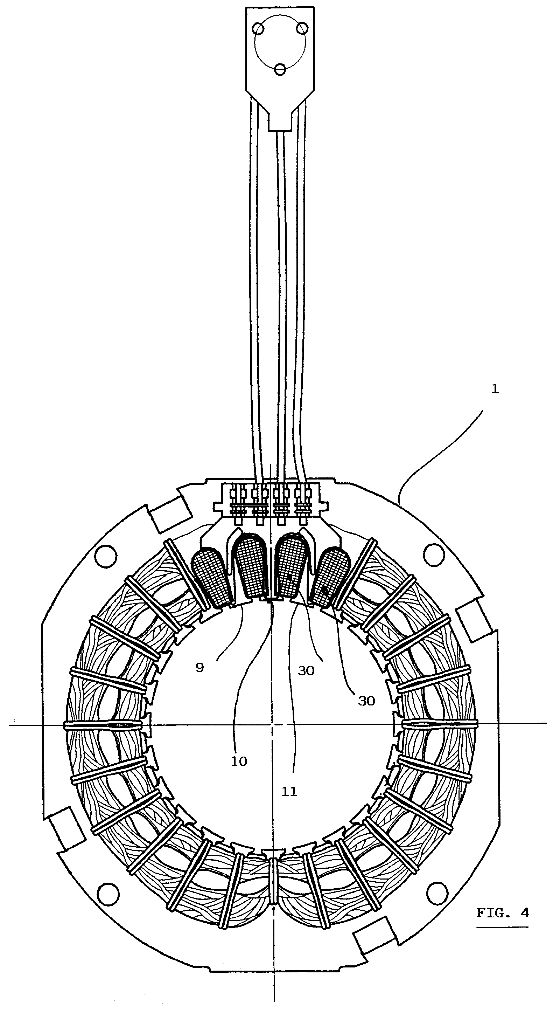

- Figure 4 is a half-height view of a horizontal section of the connection block illustrated in Figure 3a;

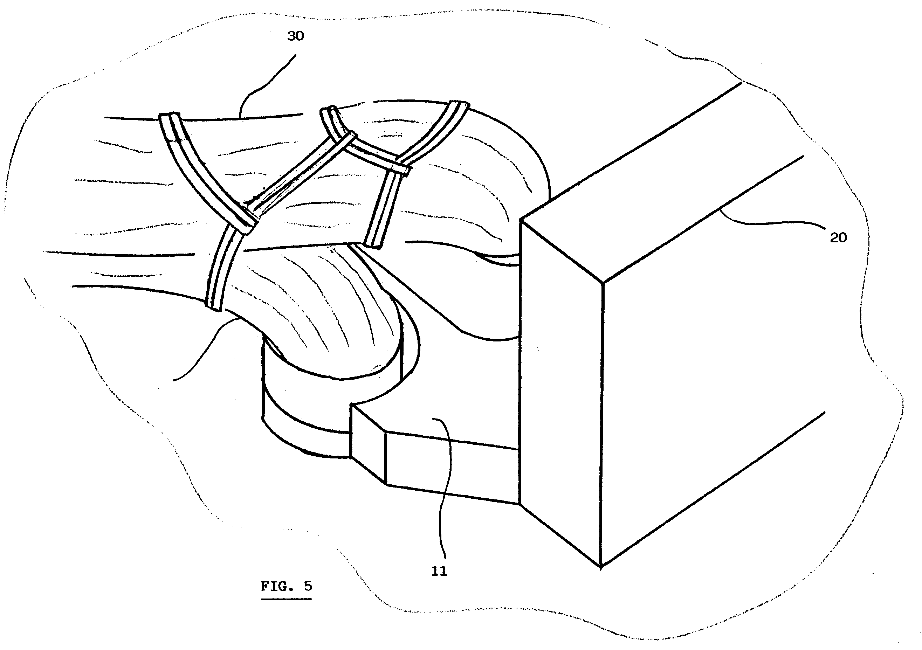

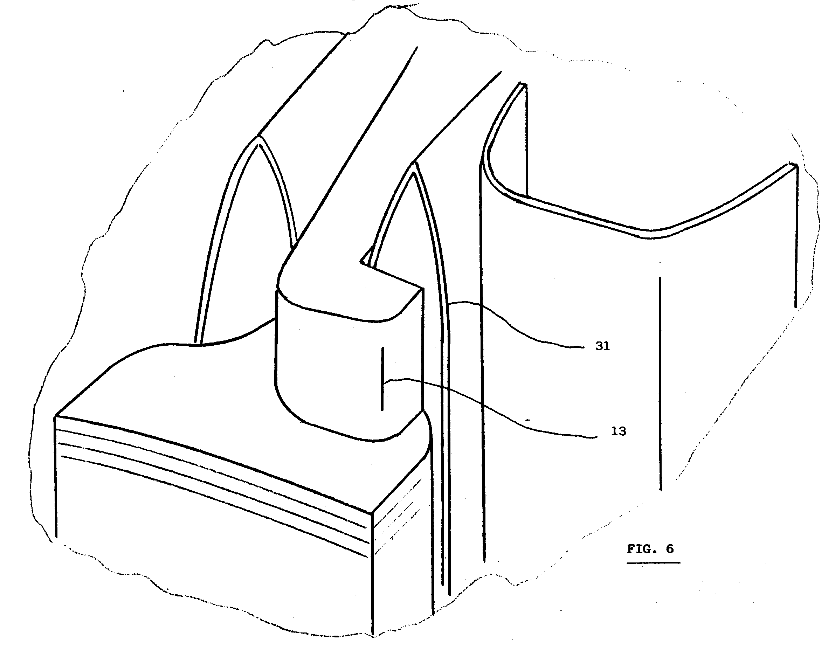

- Figures 5 and 6 are as many perspective views from practically opposite points of two details of a connection block according to the present invention;

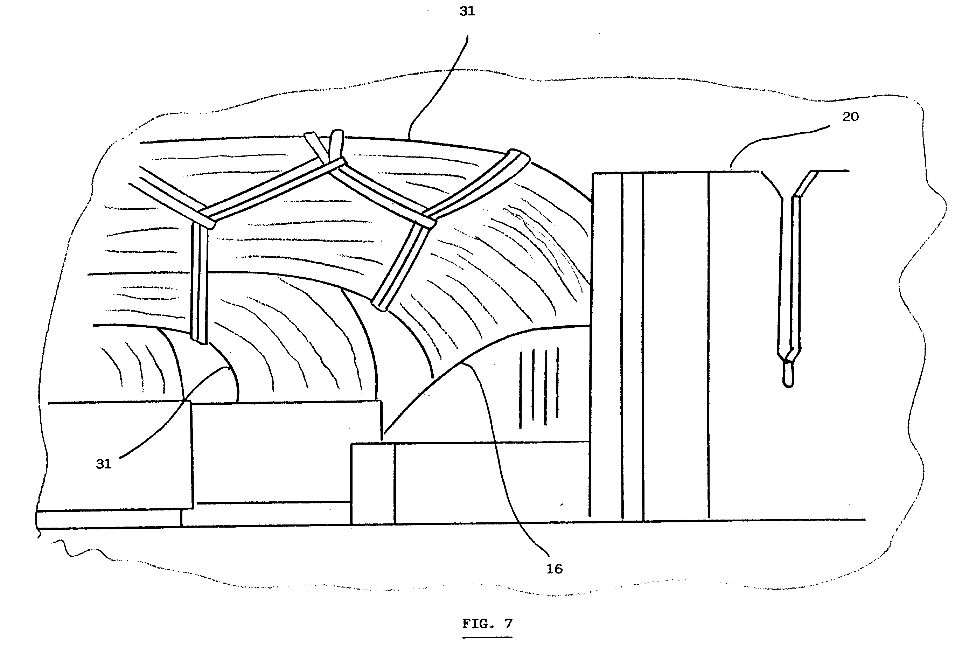

- Figure 7 is an outside view of a detail of a connection block of a stator according to the present invention;

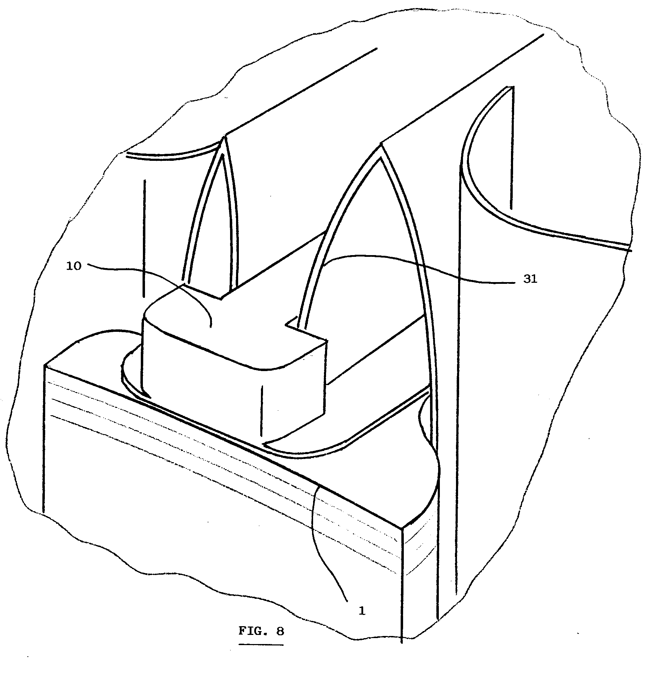

- Figure 8 is a perspective outside view of another detail of the connection block shown in the above cited Figures;
- Figure 9 is a view of a contact mounted on the connection block according to the present invention.

The present invention consists substantially of a connection block to which the leads coming from the stator windings are brought for connection with the wires from the external power-supply and control circuits.

Such a connection block shall meet following requirements:
- it shall be used as a single piece, so that a single block is capable of complying with all connection needs;
- it shall be polyvalent and interchangeable, so that a same block is capable of being used in conjunction with the several stator models;
- it shall be capable of being mounted at the end of the production process of the stator, so that the basic production cycle can remain unaltered;
- it shall be capable of being easily assembled by hand through a simple snap-fitting operation;
- after assembly, it shall remain firmly in its due position;
- after assembly, it shall be capable of accomodating the electrical connections through any appropriate process that can be fully automated.

To such a purpose, said connection block consists of a single-piece element 8 comprising a body 20 which accomodates the electric contacts, wherein the recesses provided for accomodating said contacts are oriented in the opposite direction with respect to the side with which they are resting on the stator. The block comprises a plurality of appendices 9, 10, 11 which are coplanar and, therefore, capable of being firmly inserted in the spaces provided between two or more pairs of contiguous electric coils (30), and which are arranged so as to be in contact with the respective outer surface of the stator 1.

Said appendices comprise a middle appendix 10 and two outer appendices 9, 11, said outer appendices being provided at their end portions with respective anchorage teeth 13, 14 which are facing outwardly in opposite directions and substantially adhering against said surface of the stator.

In this way, when said blocks are mounted, said two outer appendices and said middle appendix close upon two contiguous coils 30, the respective slots and the related insulating layers 31 between the inside of the slots and the respective coils in such a manner that said anchorage teeth 13, 14 snap into engagement along the rear edges of said insulating layers 31, thereby preventing the related connection block from being removed accidentally.

It is anyway possible for these blocks to move to a position which is separated from the surface of the stator, thereby impairing the stability of the electrical contacts. In order to avoid such a risk, two distinct improvements have been devised: the first one consists in providing said appendices, in particular the middle appendix 10, with a thin flat rigid membrane 15 protruding from the edge of the appendix which is in contact with the stator and extending for a short length in opposite directions, said membrane being adapted to completely adhere against the surface of the stator.

When the connection block is applied, said membrane engages the surface of said partially elastic insulating layers 31 by pressing with its edge thereagainst in a direction which is orthogonal to the plane of the laminations, thereby locking the same block in its position.

The second improvement consists in providing said connection block with a plurality of anchorage projections 16, 17 arranged between said appendices and said body 20, as shown in the Figures. In such a manner, a possible rotational displacement of the connection block is additionally hindered by said projections which, by immediately interfering with the above lying coils, do not allow for any displacement of the block.

In order to facilitate the electric connection of the leads coming from the coils with the external wires, said body of the connection block is in an advantageous manner provided with a plurality of recesses 21, 22, 23 extending in an opposite direction with respect to the position of the stator, which are adapted to accomodate respective contacts 24. The purpose of such contacts is to electrically connect the electric leads 4, 5, 6 coming from said electric coils with respective electric wires 32, 33, 34 which branch off from said block to electrically connect said coils to the circuits outside the compressor casing.

The connection block according to the present invention is therefore assembled according to the following sequence: the procedure starts with the insertion in said recesses of the leads coming from the coils; then said contacts are inserted in the same recesses (a single contact in each recess), and finally said external wires are applied.

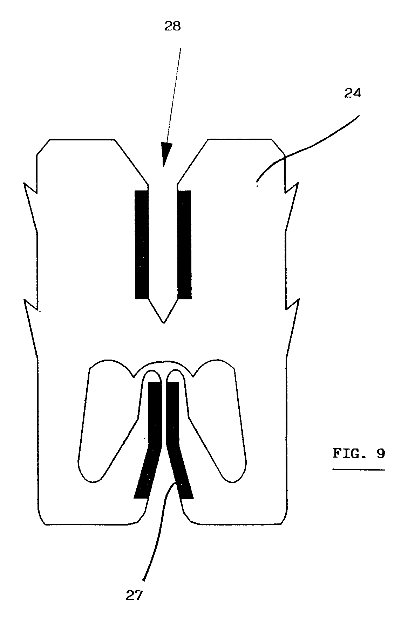

For said contacts to be adapted to connect said leads with the corresponding wires, they are in an advantageous manner provided with at least a first slit 27 adapted to engage a first electric lead coming from said electric winding, as well as a second slit 28 arranged in an opposite position with respect to said first slit and adapted to engage the corresponding electric wire, as shown in Figure 9.

It will be appreciated that the above description, as well as the illustrations cited with reference to the accompanying drawings, have been given merely by way of non-limiting example to facilitate a better understanding of the present invention, and that various modifications and variations can be made thereto without departing from the scope of the present invention.

## Claims

1. Electric compressor, in particular for household-type refrigerators, comprising a stator (1), a plurality of slots (2), a respective plurality of electric coils (3) inserted in said slots, a respective plurality of insulating layers arranged between said slots and said electric coils, a plurality of electric leads (4, 5, 6) terminating said electric coils and having their free ends engaged in an insulating element, **characterized in that** said insulating element is formed by a single-piece block (8) which comprises a body (20) containing electric contacts and a plurality of appendices (9, 10, 11) adapted to be inserted firmly in the spaces existing between two or more pairs of contiguous electric coils.

2. Electric compressor according to claim 1, **characterized in that** said appendices are arranged so as to be in contact with a surface of said stator.

3. Electric compressor according to claim 2, **characterized in that** said appendices comprise a middle appendix (10) and two outer appendices (9, 11), said outer appendices (9, 11) being provided at their respective end portions with respective anchorage teeth (13, 14) which extend outwardly and substantially adhere against said surface of the stator.

4. Electric compressor according to claim 2 or 3, **characterized in that** middle appendix (10) is provided with a rigid flat membrane (15) extending sidewise in opposite directions and adapted to completely adhere against said surface of the stator.

5. Electric compressor according to any of the preceding claims 2 through to 4, **characterized in that** said block is provided with a plurality of anchorage projections (16, 17) arranged between said appendices and said body (20).

6. Electric compressor according to any of the preceding claims, **characterized in that** said body is provided with a plurality of recesses (21, 22, 23) accomodating respective contacts (24) adapted to electrically connect said electric leads (4, 5, 6) coming from said electric coils with respective electric conductors (32, 33, 34) which connect said coils with the outside of the compressor.

7. Electric compressor according to claim 6, **characterized in that** said contacts (24) are provided with at least a first slit (27) adapted to engage an electric lead coming from said electric coil, and a second slit (28) arranged in an opposite position with respect to the first one and adapted to engage a corresponding one of said electric conductors (31, 32, 33).
